# EUROPEAN PATENT APPLICATION

(11) **EP 1 900 954 A1**
(43) Date of publication of application: **19.03.2008**
(21) Application number: 07014698.0
(22) Date of filing: 26.07.2007
(51) Int. Cl.: F16D 23/02

(54) **Gearwheel unit, transmission having gearwheel unit and gearwheel manufacturing method**

(30) Priority: 14.09.2006 JP 2006250144
(71) Applicant: Aichi Machine Industry Co. Ltd., Nagoya-shi, Aichi 456-8601 (JP)
(72) Inventor: Suzumura, Yasushi, Nagoya-shi, Aichi 4568601 (JP); Goto, Tadashi, Nagoya-shi, Aichi 4568601 (JP)
(74) Representative: Schaeberle, Steffen

(57) **Abstract**

A gearwheel unit includes a gear body (75a) and a clutch gear (95). The gear body includes a gear part (10) and a positioning part (11). The gear part is configured and arranged to transmit rotation of a rotational shaft with a prescribed change gear ratio. The positioning part is integrally formed with the gear part at a position spaced apart from the gear part by a prescribed distance in an axial direction so that a prescribed open space (S) is formed between the positioning part and the gear part. The clutch gear is fixedly coupled to the gear body as being positioned with respect to the gear body by the positioning part so that at least a part of the clutch gear overlaps the prescribed open space formed between the positioning part and the gear part of the gear body when viewed in a radial direction.

## Description

### CROSS-REFERENCE TO RELATED APPLICATIONS

This application claims priority to Japanese Patent Application No. 2006-250144 filed on September 14, 2006. The entire disclosure of Japanese Patent Application No. 2006-250144 is hereby incorporated herein by reference.

### BACKGROUND OF THE INVENTION

### Field of the Invention

The present invention relates to a gearwheel unit, a transmission having the gearwheel unit, and a gearwheel unit manufacturing method. Background Information

Japanese Laid-Open Patent Application No. 2002-174261 discloses a conventional gearwheel unit including a transmission gear and a clutch gear that is configured and arranged to fit into an internal spline part of a coupling sleeve of a synchronizing mechanism. In such a conventional gearwheel unit, the clutch gear is brought into contact with a positioning part formed on an axial surface of the transmission gear and held in place in an axial direction with respect to the transmission gear. The clutch gear is then fixedly coupled to the transmission gear by welding or the like.

In view of the above, it will be apparent to those skilled in the art from this disclosure that there exists a need for an improved gearwheel unit, transmission having the gearwheel unit and a gearwheel unit manufacturing method. This invention addresses this need in the art as well as other needs, which will become apparent to those skilled in the art from this disclosure.

### SUMMARY OF THE INVENTION

Because transmissions in recent years are required to have a larger number of gear speeds and/or a faster gear shifting speed, transmission gears used in the transmissions have been reduced in size. Thus, the positioning part may not be able to be provided on the axial surface of the transmission gear in the conventional gearwheel unit disclosed in the above mentioned reference. In such case, it may be inevitable to position the clutch gear with respect to the transmission gear by placing the clutch gear on a gear side surface (toothed surface) of the transmission gear. The contacting surfaces between the transmission gear and the clutch gear in such instances will have wedge shapes when the transmission gear has beveled teeth. In such case, shot particles fired at the base of the teeth of the transmission gear in order to achieve higher base strength will not readily contact the areas in the vicinity of the contacting surfaces between the transmission gear and the clutch gear, and the target strength may not be able to be ensured. Moreover, the shot particles may become embedded or jammed in the contacting surfaces between the transmission gear and the clutch gear. In order to avoid these problems, the clutch gear may be held in place by using a jig at a position away from the transmission gear in the axial direction and then fixedly coupled to the transmission gear, or the clutch gear may be formed integrally with the transmission gear. However, manufacturing efficiency declines in the former case, and the size of the gearwheel unit itself and the transmission having the gearwheel unit increase in the axial direction in the latter case.

The present invention was contrived in light of the aforementioned problems in the prior art. One object of the present invention is to provide a gearwheel unit and a gearwheel unit manufacturing method in which an overall axial length of the gearwheel unit can be relatively short. Another object of the present invention is to provide a gearwheel unit and a gearwheel unit manufacturing method in which the strength of the gearwheel unit is ensured. Further object of the present invention is to provide a gearwheel unit and a gearwheel unit manufacturing method that can prevent the shot particles from embedding or jamming when the short particles are fired in order to improve the strength of the base of the teeth in the gearwheel unit. Further object of the present invention is to provide a transmission having a gearwheel unit with a relatively reduced size and/or relatively reduced number of defects caused by embedded foreign material in the gearwheel unit.

In order to achieve the above mentioned objects of the present invention, a gearwheel unit, which is adapted to be coupled to a rotational shaft, includes a gear body and a clutch gear. The gear body includes a gear part and a positioning part. The gear part is configured and arranged to transmit rotation of the rotational shaft with a prescribed change gear ratio. The positioning part is integrally formed with the gear part at a position spaced apart from the gear part by a prescribed distance in an axial direction so that a prescribed open space is formed between the positioning part and the gear part. The clutch gear is fixedly coupled to the gear body as being positioned with respect to the gear body by the positioning part so that at least a part of the clutch gear overlaps the prescribed open space formed between the positioning part and the gear part of the gear body when viewed in a radial direction.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:

Figure 1 is an overall axial cross sectional view of a transmission having a gearwheel unit in accordance with a first embodiment of the present invention;

Figure 2 is an exploded axial cross sectional view of the gearwheel unit including a clutch gear and a gear body, which constitute the smallest driven gearwheel unit within the transmission, in accordance with the first embodiment of the present invention;

Figure 3 is an axial cross sectional view of the gearwheel unit illustrated in Figure 2 showing a state in which the clutch gear is assembled and fixedly coupled to the gear body in accordance with the first embodiment of the present invention;

Figure 4 is an exploded axial cross sectional view of a gearwheel unit including a gear body and a clutch gear in accordance with a second embodiment of the present invention;

Figure 5 is an axial cross sectional view of the gearwheel unit illustrated in Figure 4 showing a state in which the clutch gear is assembled and fixedly coupled to the gear body in accordance with the second embodiment of the present invention;

Figure 6 is an exploded axial cross sectional view of a gearwheel unit including a gear body and a clutch gear in accordance with a third embodiment of the present invention; and

Figure 7 is an axial cross sectional view of the gearwheel unit illustrated in Figure 6 showing a state in which the clutch gear is assembled and fixedly coupled to the gear body in accordance with the third embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

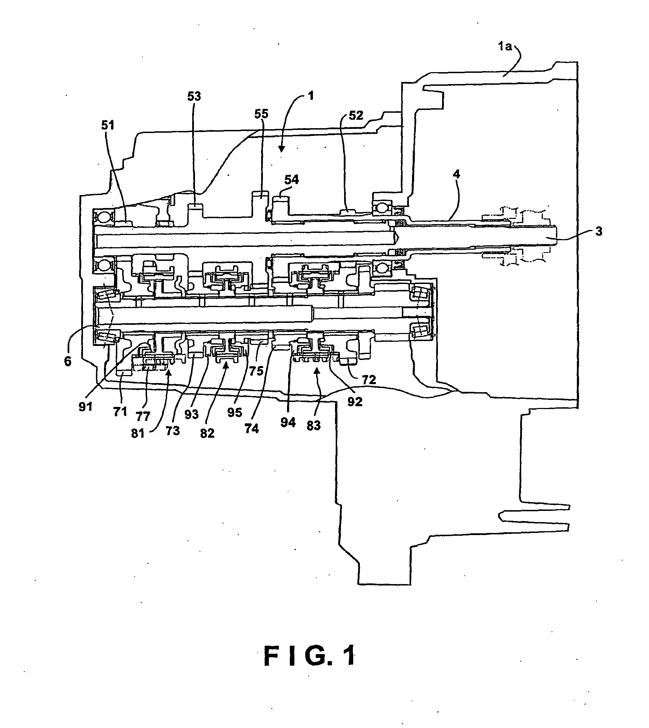

Referring initially to Figure 1, a transmission 1 including a gearwheel unit in accordance with a first embodiment of the present invention will be described. Figure 1 is an overall axial cross sectional view of the transmission 1 having the gearwheel unit of the first embodiment.

As shown in Figure 1, the transmission 1 includes a first input shaft 3, a second input shaft 4, an output shaft 6 and a gear-changing mechanism. The first input shaft 3 is connected to a crank shaft of an engine (not shown) via a first clutch (not shown). The second input shaft 4 is connected to the crank shaft of the engine (not shown) via a second clutch (not shown). The second input shaft 4 is coaxially fitted onto the first input shaft 3. The output shaft 6 is connected to the first input shaft 3 and the second input shaft 4 via the gear-changing mechanism.

The gear-changing mechanism includes a plurality of driving gearwheels 51 to 55, a plurality of driven gearwheels 71 to 75, and a plurality of synchronizing devices 81 to 83. Each of the driving gearwheels 51 to 55 is immovably supported by corresponding one of the first input shaft 3 and the second input shaft 4. Each of the driven gearwheels 71 to 75 engages with the respective one of the driving gearwheels 51 to 55 and is rotatably positioned on the output shaft 6. In the first embodiment of the present invention, each of the synchronizing devices 81 to 83 is configured and arranged to selectively engage corresponding one of the driven gearwheels 71 to 75 to the output shaft 6 while synchronizing the rotational frequencies of the output shaft 6 and the corresponding one of the driven gearwheels 71 to 75.

More specifically, the driving gearwheels 51 to 55 include the first gear driving gearwheel 51, the third gear driving gearwheel 53, and the fifth gear driving gearwheel 55 that together constitute a odd-numbered gear group of the driving gearwheels. The first gear driving gearwheel 51, the third gear driving gearwheel 53, and the fifth gear driving gearwheel 55 are integrally formed with the first input shaft 3 in the stated order from the left side in Figure 1. Moreover, the driving gearwheels 51 to 55 further include the second gear driving gearwheel 52 and the fourth gear driving gearwheel 54 that together constitute an even-numbered gear group of the driving gearwheels. The second gear driving gearwheel 52 and the fourth gear driving gearwheel 54 are integrally formed with the second input shaft 4 in the stated order from the right side in Figure 1.

The driven gearwheels 71 to 75 include the first gear driven gearwheel 71, the second gear driven gearwheel 72, the third gear driven gearwheel 73, the fourth gear driven gearwheel 74, and the fifth gear driven gearwheel 75, which engage with the first gear driving gearwheel 51, the second gear driving gearwheel 52, the third gear driving gearwheel 53, the fourth gear driving gearwheel 54, and the fifth gear driving gearwheel 55, respectively. The driven gearwheels 71 to 75 are rotatably coupled to the output shaft 6 as idler gearwheels as shown in Figure 1.

The synchronizing device 81 is positioned between the driven gearwheel 71 and the driven gearwheel 73. The synchronizing device 82 is positioned between the driven gearwheel 73 and the driven gearwheel 75. The synchronizing device 83 is positioned between the driven gearwheel 72 and the driven gearwheel 74. The synchronizing operations are performed by sliding a synchronizer ring (not shown) of the respective one of synchronizing devices 81 to 83 against one of a plurality of clutch gears 91 to 95. More specifically, the synchronizing device 81 is selectively moved to engage the clutch gear 91 provided to the lateral surface of the first gear driven gearwheel 71 to obtain first gear. The synchronizing device 82 is selectively moved to engage the clutch gear 93 provided to the lateral surface of the third gear driven gearwheel 73 to obtain third gear, or to engage the clutch gear 95 provided to the lateral surface of the fifth gear driven gearwheel 75 to obtain fifth gear. The synchronizing device 83 is selectively moved to engage the clutch gear 92 provided to the lateral surface of the second gear driven gearwheel 72 to obtain second gear or to engage the clutch gear 94 provided to the lateral surface of the fourth gear driven gearwheel 74 to obtain fourth gear. The synchronizing devices 81 to 83 are conventional components that are well known in the art. Since the synchronizing devices 81 to 83 are well known in the art, the structure thereof will not be discussed or illustrated in detail herein.

Among the driven gearwheels 71 to 75, the fifth gear driven gearwheel 75 provides the smallest change gear ratio in the transmission 1. In this example, the fifth gear driven gearwheel 75 and the clutch gear 95 are formed as the gearwheel unit in accordance with the first embodiment of the present invention. The structure of the gearwheel unit for the fifth gear driven gearwheel 75 will be described in detail below.

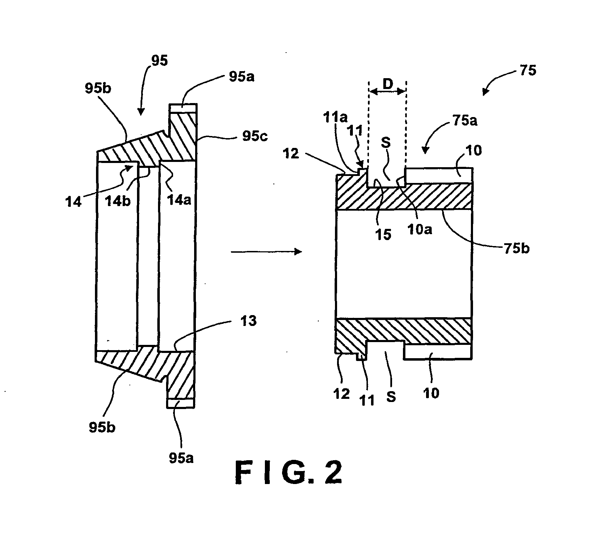

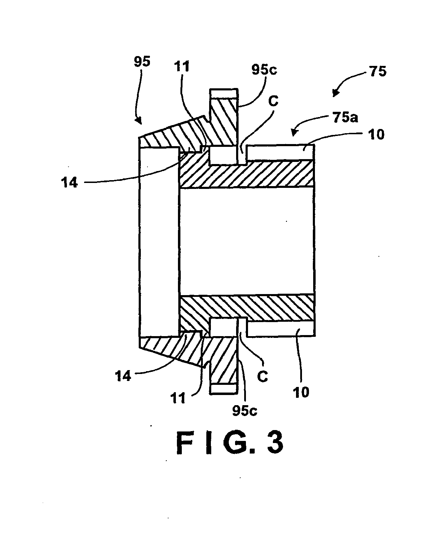

Since the fifth gear driven gearwheel 75 is the smallest driven gearwheel in the transmission 1, the diameter of the fifth gear driven gearwheel 75 is relatively small, and thus, it is difficult to provide a rim part that abuts against the clutch gear 95 to hold the clutch gear 95 in place in the axial direction. However, in accordance with the first embodiment of the present invention, the clutch gear 95 and the fifth gear driven gearwheel 75 are configured as shown in Figures 2 and 3 to fixedly couple the clutch gear 95 to the fifth gear driven gearwheel 75. Figure 2 is an exploded axial cross sectional view of the fifth gear driven gearwheel 75 and the clutch gear 95 in accordance with the first embodiment of the present invention. Figure 3 is an axial cross sectional view of the fifth gear driven gearwheel 75 and the clutch gear 95 illustrated in Figure 2 showing a state in which the clutch gear 95 is assembled and fixedly coupled to the fifth gear driven gearwheel 75 in accordance with the first embodiment of the present invention

As shown in Figures 2 and 3, the fifth gear driven gearwheel 75 includes a gear body 75a having a shaft hole 75b, a gear part 10, a protruding section 11 (positioning part) and a fitting surface 12 (axially extending supporting surface). The output shaft 6 shown in Figure 1 is configured and arranged to movably inserted into the shaft hole 75b. The gear part 10 is formed on an outer circumferential surface of the gear body 75a. The protruding section 11 is formed to protrude outwardly in the radial direction at a location spaced apart from an axial end surface 10a (e.g., left end surface in Figures 2 and 3) of the gear part 10 by a prescribed distance D when viewed in a radial direction to form a prescribed open space S. An axial end surface of the protruding section 11 (e.g., left side surface in Figures 2 and 3) forms a contacting surface 11 a (radially extending positioning surface). The fitting surface 12 is formed on an outer circumferential surface of the gear body 75a disposed adjacent to the contacting surface 11a on the side opposite from the open space S (e.g., left side of the contacting surface 11a in Figures 2 and 3).

The open space S is formed by providing an annual groove 15 between the gear part 10 and the protruding section 11. The distance D across the open space S in the axial direction is established so that cutting the teeth on a gear forming part of the gear body 75a to form the gear part 10 is not impeded by the protruding section 11 when using a tooth-cutting tool to machine the gear part 10. The teeth of the gear part 10 are accordingly cut out by the tooth-cutting tool to form the gear body 75a.

The clutch gear 95 is assembled and fixedly coupled to the gear body 75a to form the gearwheel unit of the first embodiment. The clutch gear 95 has a gear part 95a, a conical or cone part 95b, an axial end surface 95c, an engagement hole 13 and an inside protrusion 14. The gear part 95a is formed on an outer circumferential surface on the right side end in Figures 2 and 3. The cone part 95b is formed on the outer circumferential surface on the side opposite from the gear part 95a (e.g., left side in Figures 2 and 3) and is slanted toward an axial end opposite from the gear part 95a (e.g., left side end in Figures 2 and 3). The engagement hole 13 is formed on the inner circumferential surface of the clutch gear 95. The inside protrusion 14 is formed to protrude inwardly substantially toward a center axis of the engagement hole 13. The axial end surface of the inside protrusion 14 (e.g., the right end surface in Figures 2 and 3) forms a contacting surface 14a (radially extending positioning surface), and the inner circumferential surface of the inside protrusion 14 forms a fitting surface 14b (axially extending supporting surface).

When the clutch gear 95 is fitted into the gear body 75a from the left side as indicated by an arrow in Figure 2, the contacting surface 14a of the inside protrusion 14 of the clutch gear 95 is brought into contact with the contacting surface 11a of the protruding section 11 of the gear body 75a. Thus, the clutch gear 95 is positioned and held in place with respect to the gear body 75a as shown in Figure 3. The fitting surface 14b of the clutch gear 95 is fitted to the fitting surface 12 of the gear body 75a in this state. In this assembled state as shown in Figure 3, the axial end surface 95c of the clutch gear 95 is positioned in a location that overlaps the open space S of the gear body 75a in the axial direction (when viewed in the radial direction). The protruding section 11 of the gear body 75a and the inside protrusion 14 of the clutch gear 95 are dimensioned so that a prescribed clearance C is formed between the axial end surface 95c of the clutch gear 95 and the axial end surface 10a of the gear body 75.

More specifically, the clearance C is set to have a larger dimension than a diameter of a shot particle so that the shot particles will not be embedded or jammed between the gear body 75a and the clutch gear 95 when shot-peening treatment is performed to improve the strength of the gear part 10.

After the clutch gear 95 is positioned and attached to the gear body 75a and the clutch gear 95 and the gear body 75a are fixedly coupled by welding or the like as shown in Figure 3, the shot particles are fired at the gear part 10 to improve the strength of the gear part 10. The shot particles that are fired at this time can effectively contact the entire surface of the gear part 10, and the strength thereof can be ensured. Moreover, the shot particles can be prevented from embedding or jamming between the gear body 75a and the clutch gear 95 since the clearance C is set to a size that is larger than the diameter of the shot particle. The shot particles are also fired at the gear part 95a of the clutch gear 95 to ensure the strength of the gear part 95a and to deburr the gear part 95a.

Since the clutch gear 95 is positioned with respect to the gear body 75a and fixedly coupled to the gear body 75a to overlap the open space S between the protruding section 11 and the gear part 10 of the gear body 75a in the axial direction, the overall axial length of the gearwheel unit can be relatively reduced, and the entire structure of the gearwheel unit can be made relatively compact.

Therefore, the clutch gear 95 is properly positioned with respect to the gear body 75a and fixedly coupled to the gear body 75a of the fifth gear driven gearwheel 75, which is the smallest driven gearwheel in the transmission 1. The same structure of the gearwheel unit can be employed for the fixing structures between the fourth gear driven gearwheel 74 and the clutch gear 94, the third gear driven gearwheel 73 and the clutch gear 93, and the second gear driven gearwheel 72 and the clutch gear 92, which are larger than the fifth gear driven gearwheel 75. In such case, the axial lengths of the driven gearwheel units can also be reduced.

Although the first embodiment describes an example in which the present invention is adapted to the fifth gear driven gearwheel 75, which is the smallest driven gearwheel in the transmission 1, the structure of the gearwheel unit of the present invention can also be applied to a driving gearwheel for the largest change gear ration (e.g., the first gear driving gearwheel 51 in the case of the transmission 1 illustrated in Figure 1). However, in the transmission 1 illustrated in Figure 1, the first gear driving gearwheel 51 is formed integrally with the first input shaft 3. Therefore, the use of the gearwheel unit structure as described above may not be necessary for the first gear driving gearwheel 51. However, if the transmission 1 is arranged such that the first gear driving gearwheel 51 is rotatably supported on the first input shaft 3 and selectively fixed to the first input shaft 3 by a synchronizing device to achieve first gear, the gearwheel unit structure as illustrated in Figures 2 and 3 may be employed for the first gear driving gearwheel 51, which has the smallest size. The driven gearwheel can be assembled and fixed to a clutch gear at a reduced axial length, and the size of the entire structure of the transmission 1 can be reduced.

Moreover, the structure of the gearwheel unit of the present invention is particularly effective when the first gear driving gearwheel 51 is rotatably provided to the second input shaft 4. More specifically, the second input shaft 4 has a relatively large shaft diameter since the second input shaft 4 is a hollow shaft. Thus, it is difficult to provide a rim for bringing the clutch gear 91 into contact with the first gear driving gearwheel 51 and for holding the clutch gear 91 in place in the axial direction if the first gear driving gearwheel 51, which is the smallest driving gearwheel, is rotatably coupled to the second input shaft 4. Therefore, by fixing the clutch gear 91 and the first gear driving gearwheel 51 in accordance with the first embodiment of the present invention as illustrated in Figures 2 and 3, the clutch gear 91 is properly positioned and fixedly coupled to the first gear driving gearwheel 51.

### SECOND EMBODIMENT

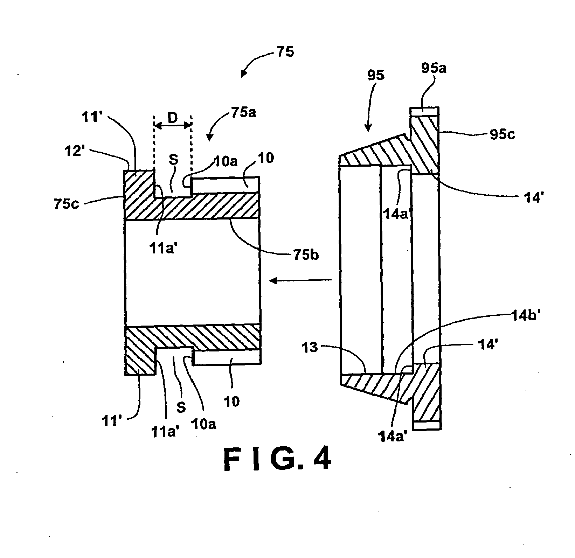

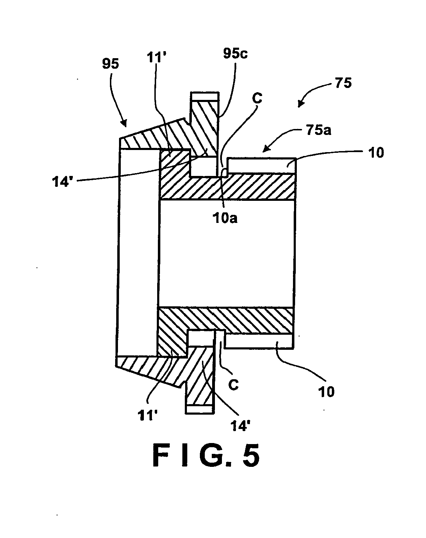

Referring now to Figures 4 and 5, a gearwheel unit in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity. The parts of the second embodiment that differ from the parts of the first embodiment will be indicated with a single prime (').

The gearwheel unit of the second embodiment differs from the gearwheel unit of the first embodiment in a coupling structure (positioning structure) between the fifth gear driven gearwheel 75 and the clutch gear 95.

Figure 4 is an exploded axial cross sectional view of the gearwheel unit including the gear body 75a and the clutch gear 95 in accordance with the second embodiment. Figure 5 is an axial cross sectional view of the gearwheel unit illustrated in Figure 4 showing a state in which the clutch gear 95 is assembled and fixedly coupled to the gear body 75a in accordance with the second embodiment.

In the gearwheel unit of the second embodiment, similarly to the first embodiment, the clutch gear 95 is properly positioned with respect to the gear body 75a of the fifth gear driven gearwheel 75, which is the smallest driven gearwheel in the transmission 1 of Figure 1, and the clutch gear 95 is fixedly coupled to the gear body 75a to form the gearwheel unit having a reduced axial length.

As shown in Figures 4 and 5, the gear body 75a includes a protruding section 11', a fitting surface 12' (axially extending supporting surface), and an axial end surface 75c (e.g., left end surface in Figures 4 and 5). The prescribed open space S in the second embodiment is formed to the left side of the gear part 10 of the gear body 75a in Figures 4 and 5. The protruding section 11' is formed integrally to protrude outwardly in the radial direction at a length extending from the left side of the open space S in Figures 4 and 5 to the axial end surface 75c of the gear body 75a. The perpendicular surface on the right end of the protruding section 11' of the gear body 75a forms a contacting surface 11 a' (radially extending positioning surface) that contacts with the clutch gear 95 when the clutch gear 95 is inserted to the gear body 75a as shown in Figure 5. The outer circumferential surface of the protruding section 11' forms the fitting surface 12'. Similarly to the first embodiment, the protruding section 11' is spaced apart from the gear part 10 by the prescribed distance D so that the dimension of the open space S in the axial direction in the gear body 75a is set so that the teeth can be cut in the gear part 10 using a tooth-cutting tool without obstruction by the protruding section 11'.

The clutch gear 95 of the second embodiment includes an inside protrusion 14' that protrudes inwardly in the radial direction. The inside protrusion 14' is formed integrally on the axial end surface 95c (e.g., right end surface in Figures 4 and 5) of the clutch gear 95. The gear part 95a is formed on the outer circumferential surface of the clutch gear 95. The inside protrusion 14' has an inside diameter that is set to be slightly larger than an outside diameter of the gear part 10 of the gear body 75a. The inside diameter of the inside protrusion 14' is also set to be smaller than an outside diameter of the protruding section 11' of the gear body 75a. The left end surface of the inside protrusion 14' in Figures 4 and 5 forms a contacting surface 14a' (radially extending positioning surface), and the inner circumferential surface of the engagement hole 13 disposed on the left side of the contacting surface 14a' is arranged as a fitting surface 14b' (axially extending supporting surface) as shown in Figures 4 and 5.

The clutch gear 95 is positioned with respect to the gear body 75a and assembled on the gear body 75a as being inserted from the right side as indicated by an arrow in Figure 4. The contacting surface 14a' of the inside protrusion 14' of the clutch gear 95 is brought into contact with the contacting surface 11a' of the protruding section 11' of the gear body 75a and the clutch gear 95 is properly held in place with respect to the gear body 75a. The fitting surface 14b' of the clutch gear 95 and the fitting surface 12' of the gear body 75a are fit together in this state, and then fixed together by welding or the like. In this assembled state, the clearance C, which is set to be larger than the diameter of the shot particle, is formed between the end surface 95c of the clutch gear 95 and the end surface 10a of the gear body 75a. After the clutch gear 95 and the gear body 75a are assembled and fixedly coupled, the shot particles are fired to the gear part 10 of the gear body 75a to effectively improve the strength at the bases of the teeth of the gear part 10. The shot particles can be effectively prevented from embedding or jammed between the gear body 75a and the clutch gear 95 at this point. The shot particles are also fired at the gear part 95a of the clutch gear 95 to ensure the strength of the gear part 95a and to deburr the gear part 95a.

### THIRD EMBODIMENT

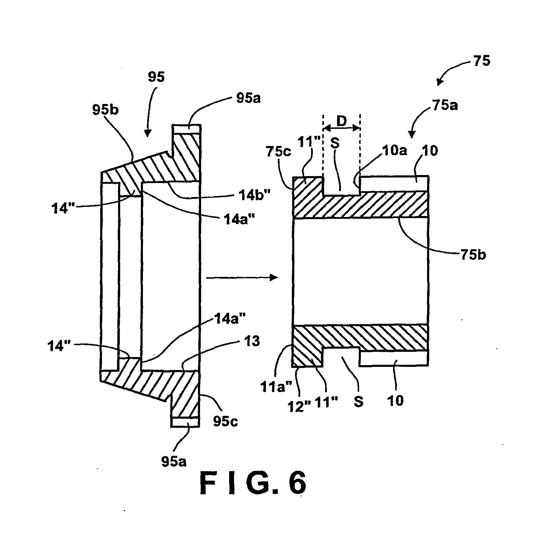

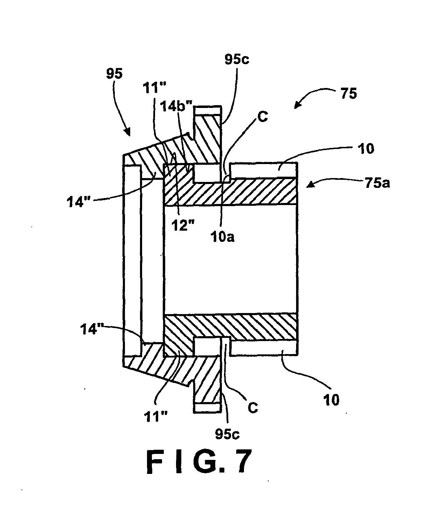

Referring now to Figures 6 and 7, a gearwheel unit in accordance with a third embodiment will now be explained. In view of the similarity between the first, second and third embodiments, the parts of the third embodiment that are identical to the parts of the first or second embodiment will be given the same reference numerals as the parts of the first or second embodiment. Moreover, the descriptions of the parts of the third embodiment that are identical to the parts of the first embodiment may be omitted for the sake of brevity. The parts of the third embodiment that differ from the parts of the first or second embodiment will be indicated with a double prime (").

The gearwheel unit of the third embodiment is different from the gearwheel unit of the first or second embodiment in a coupling structure (positioning structure) between the fifth gear driven gearwheel 75 and the clutch gear 95.

Figure 6 is an exploded axial cross sectional view of the gear body 75a and the clutch gear 95 in accordance with the third embodiment. Figure 7 is an axial cross sectional view of the gear body 75a and the clutch gear 95 illustrated in Figure 6 showing a state in which the clutch gear 95 is assembled and fixedly coupled to the gear body 75a in accordance with the third embodiment.

The gear body 75a of the third embodiment has a structure substantially identical to the gear body 75a of the second embodiment except that an outer diameter of a protruding section 11" is substantially the same as an outer diameter of the gear part 10 in the third embodiment as shown in Figures 6 and 7. The protruding section 11" is spaced apart from the gear part 10 by the prescribed distance D to form the open space S on the outer circumferential surface of the gear body 75a on the left side of the axial end surface 10a of the gear part 10 as shown in Figures 6 and 7. The protruding section 11" that protrudes outwardly in the radial direction is formed to extend from the left side of the open space S in Figures 6 and 7 to the left end surface 75c of the gear body 75a. The outer circumferential surface of the protruding section 11" forms a fitting surface 12" (axially extending supporting surface), and the left end surface of the protruding section 11", i.e., the left end surface 75c of the gear body 75a, is arranged as a contacting surface 11a" (radially extending positioning surface) on the side of the gear body 75a in the third embodiment.

The clutch gear 95 has an inside protrusion 14" that is integrally-formed with the clutch gear 95 and protrudes inwardly in the radial direction from the inner circumferential surface of the cone part 95b, which is formed on the outer circumferential surface of the clutch gear 95. The axial end surface of the inside protrusion 14" (e.g., right end surface of the inside protrusion 14" in Figures 6 and 7) forms a contacting surface 14a" (radially extending positioning surface), and the inner circumference of the engagement hole 13 on the right side of the contacting surface 14a" is arranged as a fitting surface 14b" (axially extending supporting surface).

The clutch gear 95 includes the engagement hole 13 having an inside diameter that is slightly larger than the outside diameter of the gear part 10 of the gear body 75a. Moreover, the inside diameter of the engagement hole 13 is set to conform to the outside diameter of the protruding section 11" of the gear body 75a. The fitting surface 12" on the outer circumference of the protruding section 11" of the gear body 75a is fitted to the fitting surface 14b" on the inner circumference of the engagement hole 13 of the clutch gear 95 when the clutch gear 95 is assembled with the gear body 75a from the left side (as indicated by an arrow in Figure 6). The contacting surface 14a" of the inside protrusion 14" of the clutch gear 95 is brought into contact with the contacting surface 11a", which is arranged as the left end surface of the protruding section 11" of the gear body 75a in Figures 6 and 7, and held in position with respect to the gear body 75a. When the clutch gear 95 is positioned and fixedly coupled to the gear body 75a, the clearance C is formed between the axial end surface 10a of the gear body 75a and the right end surface 95c of the clutch gear 95 as shown in Figure 7. The protruding section 11" of the gear body 75a and the inside protrusion 14" of the clutch gear 95 are dimensioned so that the clearance C is set to be larger than the diameter of the shot particle.

Similarly to the first and second embodiments, at least a part of the clutch gear 95 is disposed in a position that overlaps the open space S of the gear body 75a in the axial direction, and the clutch gear 95 is fixedly coupled to the gear body 75a in the third embodiment. Therefore, an axial length of the gearwheel unit including the fifth gear driven gearwheel 75 and the clutch gear 95 can be relatively reduced, and thus, the size of the gearwheel unit can be reduced too. The teeth of the gear part 10 can be properly cut in the gear body 75a using a tooth-cutting tool before the clutch gear 95 is assembled thereto because the open space S is provided adjacent to the gear part 10. Following the assembly of the clutch gear 95, the shot-peening treatment is performed using the shot particles to the gear part 10, and the strength of the base part of the teeth of the gear part 10 can be effectively improved. The shot particles are also fired at the gear part 95a of the clutch gear 95 to ensure the strength of the gear part 95a and to deburr the gear part 95a.

According to the first to third embodiments of the present invention, the axial length of the gearwheel unit can be reduced because the clutch gear 95 is fixedly coupled to the gear body 75a while at least a part of the clutch gear 95 in the gearwheel unit is disposed in a position that overlaps in the axial direction the open space S between the gear part 10 and the protruding section 11 (11', 11").

An amount of overlap between the clutch gear 95 and the gear body 75a is set so that the clearance C between the clutch gear 95 and the end surface 10a of the gear part facing 10 the clutch gear 95 is ensured. Therefore, the shot particles can impact the entire surface of the gear part 10. As a result, the strength of the gearwheel unit can be ensured. Also, the short particles can be prevented from embedding or jamming between the gear body 75a and the clutch gear 95 by establishing the prescribed amount of overlap so that the clearance C is larger than the diameter of the shot particle.

It will be apparent to those skilled in the art from this disclosure that since the protruding section 11 (11', 11") is integrally formed with the gear body 75a in a position spaced apart from the gear part 10 by the prescribed distance D in the axial direction, the prescribed distance D is set as the distance necessary for cutting the teeth of the gear part 10. Therefore, cutting the teeth of the gear part 10 is not impeded by the protruding section 11 (11', 11").

In the first to third embodiments of the present invention, the protruding section 11 (11', 11") is provide in the gear body 75a that protrudes outwardly in the radial direction in a position spaced apart from the gear part 10 of the gear body 75a. The inside protrusion 14 (14', 14") of the clutch gear 95 is brought into contact with the protruding section 11 (11', 11") in the axial direction. Therefore, a structure for holding the clutch gear 95 in place is readily ensured by simply forming the protruding section 11 (11', 11") that protrudes outwardly in the radial direction in the gear body 75a.

In accordance with the first to third embodiments of the present invention, the gearwheel unit constitutes the smallest gearwheel of the transmission 1 and/or the gearwheel that achieve the largest reduction ratio. Therefore, in the transmission 1 having such gearwheel unit in accordance with the illustrated embodiments of the present invention, the axial length of the gearwheel unit can be reduced and the shot particles can be prevented from embedding or jamming between the clutch gear 95 and the gear body 75a. As a result, the size of the transmission 1 itself can be reduced, and defects due to the embedding of foreign material can be reduced.

In the gearwheel unit manufacturing method of the present invention, the teeth of the gear part 10 of the gear body 75a are formed by machining. The gear body 75a further includes the protruding section 11 (11', 11 ") formed integrally with the gear part 10 in a location spaced apart from the gear part 10 by the prescribed distance D in the axial direction. Then, the clutch gear 95 is positioned with respect to the gear body 75a using the protruding section 11 (11', 11") so that at least a part of the clutch gear 95 overlaps in the axial direction the open space S between the gear part 10 and the protruding section 11 (11', 11"). Next, the clutch gear 95 is fixedly coupled to the gear body 75a in a state in which the clutch gear 95 is held in place by the protruding section 11. Therefore, the axial length of the gearwheel unit can be reduced because at least a part of the clutch gear 95 is held in place so as to overlap in the axial direction the open space S between the gear part 10 and the protruding section 11 (11', 11") and then fixedly coupled to the gear body 75a. The amount of overlap between the gear body 75a and the clutch gear 95 is set to provide the prescribed clearance C between the clutch gear 95 and the axial end surface 10a of the gear part 10 facing the clutch gear 95. Thus, the shot particles can impact the entire surface of the gear part 10. As a result, the strength of the gearwheel unit can be ensured. Moreover, the shot particles can be prevented from embedding or jamming between the clutch gear 95 and the gear body 75a by establishing the amount of overlap so that the prescribed clearance C is larger than the diameter of the shot particle.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A gearwheel unit adapted to be coupled to a rotational shaft, the gearwheel unit comprising:
a gear body (75a) including
a gear part (10) configured and arranged to transmit rotation of the rotational shaft with a prescribed change gear ratio, and
a positioning part (11, 11', 11") integrally formed with the gear part (10) at a position spaced apart from the gear part (10) by a prescribed distance (D) in an axial direction so that a prescribed open space (S) is formed between the positioning part (11, 11', 11") and the gear part (10); and
a clutch gear (95) fixedly coupled to the gear body (75a) as being positioned with respect to the gear body (75a) by the positioning part (11, 11', 11") so that at least a part of the clutch gear (95) overlaps the prescribed open space (S) formed between the positioning part (11, 11', 11") and the gear part (10) of the gear body (75a) when viewed in a radial direction.

2. The gearwheel unit according to claim 1, wherein
the positioning part (11, 11', 11") of the gear body (75a) includes a protruding section (11, 11', 11") that protrudes outwardly in the radial direction, and
the clutch gear (95) includes a positioning part (14, 14', 14") that contacts the protruding section (11, 11', 11") of the positioning part (11, 11', 11") of the gear body(75a) in the axial direction so that the clutch gear (95) is positioned with respect to the gear body (75a) at the protruding section (11, 11', 11").

3. The gearwheel unit according to claim 1 or 2, wherein
the clutch gear (95) includes an axial end surface (95c) that faces the gear part (10) of the gear body (75a), the axial end surface (95c) being disposed between the gear part (10) and the positioning part (11, 11', 11") of the gear body (75a) in the axial direction.

4. The gearwheel unit according to claim 3, wherein
the gear part (10) of the gear body (75a) includes an axial end surface (10a) that faces the clutch gear (95),
the clutch gear (95) is positioned with respect to the gear body (75a) by the positioning part (11, 11', 11") of the gear body (75a) so that a prescribed clearance (C) is formed between the axial end surface (10a) of the gear part (10) of the gear body (75a) and an axial end surface (95c) of the clutch gear (95) in the axial direction.

5. The gearwheel unit according to any one of claims 2 to 4, wherein
the positioning part (14, 14', 14") of the clutch gear (95) includes an inside protrusion (14, 14', 14") protruding inwardly in the radial direction.

6. The gearwheel unit according to claim 5, wherein
the inside protrusion (14, 14', 14") of the clutch gear (95) includes a radially extending positioning surface (14a, 14a', 14a") that engages with a radially extending positioning surface (11a, 11a', 11a") of the protruding section (14, 14', 14") of the gear body (75a).

7. The gearwheel unit according to claim 6, wherein
the protruding section (14, 14', 14") of the gear body (75a) is disposed between the radially extending positioning surface (14a, 14a', 14a") of the inside protrusion of the clutch gear (95) and the gear part (10) of the gear body (75a) in the axial direction.

8. The gearwheel unit according to claim 6, wherein
The inside protrusion (14, 14', 14") of the clutch gear (95) is disposed between the radially extending positioning surface (11a, 11a', 11a") of the protruding section (14, 14', 14") of the gear body (75a) and the gear part (10) of the gear body (75a) in the axial direction.

9. The gearwheel unit according to any one of claims 1 to 8, wherein
the gear body (75a) includes an axially extending supporting surface (12, 12', 12") that engages an axially extending supporting surface (14b, 14b', 14b") of the clutch gear (95) to support the clutch gear (95) while the clutch gear (95) is positioned with respect to the gear body (75a).

10. A transmission including the gearwheel unit according to any one of claims 1 to 9, wherein
the gear part (10) of the gear body (75a) of the gearwheel unit forms at least one of a driving gearwheel (75) for the largest change gear ratio and a driven gearwheel (51) for the smallest change gear ratio among a plurality of gearwheels of a change gear mechanism.

11. A gearwheel unit manufacturing method comprising:
providing a gear body (75a) having a gear forming part and a positioning part (11, 11', 11 ") integrally formed with the gear forming part at a position spaced apart from the gear forming part by a prescribed distance (D) in an axial direction so that a prescribed open space (S) is formed between the positioning part (11, 11', 11") and the gear forming part;
machining teeth on the gear forming part to form a gear part (10) that transmits rotation of a rotational shaft with a prescribed change gear ratio;
positioning a clutch gear (95) using the positioning part (11, 11', 11") of the gear body (75a) so that at least a part of the clutch gear (95) overlaps the prescribed open space (S) formed between the positioning part (11, 11', 11") and the gear part (10) when viewed in a radial direction; and
fixedly coupling the clutch gear (95) to the gear body (75a) in a state in which the clutch gear (95) is positioned by the positioning part (11, 11', 11") with respect to the gear body (75a).

12. The gearwheel unit manufacturing method as recited in claim 11, wherein
performing shot-peening treatment on the gear part (10) of the gear body (75a) after the clutch gear (95) is fixedly coupled to the gear body (75a).
